# EUROPÄISCHE PATENTSCHRIFT

(11) **EP 4 278 109 B1**
(45) Veröffentlichungstag und Bekanntmachung des Hinweises auf die Patenterteilung: **01.07.2026**
(21) Anmeldenummer: 21701259.0
(22) Anmeldetag: 18.01.2021
(51) Int. Cl.: F16D 65/00, F16D 65/10, F16D 65/12

(54) **VERFAHREN ZUR HERSTELLUNG EINES BREMSKÖRPERS UND BREMSKÖRPER**
METHOD FOR THE PRODUCTION OF A BRAKE BODY AND BRAKE BODY
PROCÉDÉ DE FABRICATION D'UN CORPS DE FREIN ET CORPS DE FREIN

(43) Veröffentlichungstag der Anmeldung: 22.11.2023
(73) Patentinhaber: C4 Laser Technology GmbH, 01705 Freital (DE)
(72) Erfinder: STEINMEIER, Tilo, 01737 Pohrsdorf (DE); BISCHOFF, Rene, 01277 Dresde (DE)
(74) Vertreter: Rauschenbach, Marion
(86) Internationale Anmeldenummer: PCT/EP2021/050899
(87) Internationale Veröffentlichungsnummer: WO 2022/152396

(56) Entgegenhaltungen:
- DE-A1- 102019 122 613
- DE-U1- 202017 103 384
- DE-U1- 202019 107 269
- TW-B- I 678 479
- TW-U- M 548 226
- US-A1- 2008 060 891

## Beschreibung

Die vorliegende Erfindung bezieht sich auf das Gebiet der Fahrzeugtechnik und der Industrieanlagentechnik und betrifft ein Verfahren zur Herstellung von Bremskörpern sowie derart hergestellte Bremskörper. Die erfindungsgemäßen Bremskörper können beispielsweise in Fahrzeugen, Industrieanlagen oder Windkraftanlagen eingesetzt werden.

Herkömmliche Bremskörper in Fahrzeugen und bei industriellen Anwendungen sind beispielsweise als Bremsscheibe oder Bremstrommel in einteiliger Form aus einem metallischen oder keramischen Werkstoff oder als Verbundbremsscheibe beziehungsweise mehrteilige Bremsscheibe aus einem oder mehreren metallischen oder keramischen Materialien ausgebildet.

Dabei weisen Bremskörper mehrere funktionelle Bereiche auf. So werden Bremsscheiben bei Kraftfahrzeugen an die Vorder- und Hinterachsen geschraubt und weisen hierfür eine plane Anlagefläche auf, die im Kontakt mit der Felge einerseits und dem Radlager andererseits steht. Die gesamte Bremsscheibe wird über die Anlagefläche mittels Radbolzen verbunden. Auch Wind- und Industrieanlagen kraftanlagen weisen Bremskörper auf, die beispielsweise auf einer Rotorwelle aufgeschrumpft oder anderweitig mit dieser verbunden sind.

Bremskörper weisen Bereiche mit Reibflächen auf, über die die Bremswirkung im Zusammenwirken mit reibenden Bremsbelägen realisiert wird.

Zur besseren Ableitung der entstehenden Wärme können beispielsweise Bremsscheiben als innenbelüftete Scheibenbremsen ausgebildet sein. Hierzu weisen sie zwischen den Reibflächen Belüftungskanäle in unterschiedlichen Geometrien auf, die Luft ansaugen, die Scheibenbremse durchströmen, Wärme ableiten und so die Kühlung der Bremsscheibe gewährleisten.

Bremskörper werden im Stand der Technik entweder im Bereich der Reibflächen und/oder im Bereich der Belüftungskanäle mit einem Kurzzeitkorrosionsschutz oder mit einem Langzeitkorrosionsschutz mit oder ohne einer Hartstoffbeschichtung versehen. Der Kurzzeitkorrosionsschutz schützt den Bremskörper nur für einen kurzen Zeitraum gegenüber Korrosion, insbesondere um Korrosion bis zur Inbetriebnahme der Bremsanlage zu vermeiden.

Aus dem Stand der Technik sind verschiedene Lösung bekannt, um Bremsscheiben vor Korrosion und Verschleiß zu schützen.

Aus der DE 20 2018 107 169 U1 ist eine Beschichtung insbesondere für Bremsscheiben, Bremstrommeln und Kupplungsscheiben mit einer ersten Schicht bekannt, die einen metallbasierten Werkstoff aufweist, der weniger als 20 Gew.-% Wolframcarbid oder andere Carbide enthält, und eine zweite Schicht, die auf der ersten Schicht aufgebracht ist und einen Wolframcarbid-haltigen Werkstoff aufweist, der 20 Gew.-% bis 94 Gew.-% Wolframcarbid enthält, wobei die erste und die zweite Schicht thermisch gespritzte Schichten sind.

Aus der DE 20 2018 102 703 U1 ist ein Bremskörper für ein Fahrzeug bekannt, mit einem Grundkörper, der eine durch Aufrauen ausgebildete Oberfläche als Reibfläche und eine nach erfolgtem Aufrauen mittels eines thermischen Spritzverfahrens auf die Reibfläche aufgebrachte Beschichtung aufweist.

Zudem ist aus der DE 102 03 507 A1 eine Bremsscheibe für ein Fahrzeug bekannt, umfassend einen Grundkörper aus einem metallischen Werkstoff, insbesondere Grauguss, welcher wenigstens eine Reibfläche mit einer Beschichtung aus einem harten Material aufweist, wobei der Grundkörper unter der Beschichtung eine abgetragene Materialstärke in Richtung achsparallel zur Achse der Bremsscheibe aufweist, wobei der Grundkörper eine etwa um die Schichtdicke der Beschichtung, beziehungsweise bis zu +/- 20% mehr oder weniger, vorzugsweise +/- 10%, bezogen auf die Schichtdicke der Beschichtung abgetragene Materialstärke in Richtung achsparallel zur Achse der Bremsscheibe aufweist.

Und auch bekannt ist aus der DE 10 2014 008 844 A1 eine Bremsscheibe für ein Kraftfahrzeug, umfassend ein Substrat, insbesondere ein Grauguss-Substrat, mindestens eine auf dem Substrat gebildete Reibfläche und mindestens eine zumindest auf der mindestens einen Reibfläche aufgebrachten Deckschicht, wobei die Deckschicht härter und dünner ist, als das Substrat, und wobei in der Deckschicht Vertiefungen, welche die Deckschicht nicht durchdringen, und/oder farbliche Veränderungen eingebracht sind.

Aus der DE 10 2019 122 613 A1 ist ein Scheibenbremsrotor bekannt, der eine Kernschicht umfasst, die auf einer Referenzebene ausgebildet und um eine zur Referenzebene senkrechte Drehachse drehbar ist. Zudem umfasst der Scheibenbremsrotor eine Bremsschicht, die mit der Kernschicht gekoppelt ist und eine Bremsfläche aufweist, wobei die Bremsfläche an einer Außenseite der Bremsschicht und nicht parallel zur Drehachse ausgebildet ist. Weiterhin ist eine Anzeigestruktur vorhanden, die zwischen der Referenzebene und der Bremsfläche vorgesehen ist, ohne in einem Vorgebrauchszustand des Scheibenbremsrotors durch die Bremsfläche freigelegt zu sein.

Aus der US 2008 / 060 891 A1 ist eine Bremsscheibenstruktur mit Verbundwerkstoffen bekannt, die eine scheibenförmige Innenscheibe aus einem Leichtmetallwerkstoff und mindestens zwei Außenscheiben umfasst, die jeweils gestapelt und mit der Ober- und Unterseite der Innenscheibe durch einen metallurgischen Reaktionsprozess verbunden sind. Die äußeren Scheiben sind scheibenförmig und aus einem Eisenmetallmaterial hergestellt.

Aus der DE 10 2017 103 384 U1 ist eine Bremsscheibe bekannt, die mit einer Wärmeableitstruktur versehen ist und verschleißfest ist und ein geringes Gewicht aufweist.

Aus der TW I 678 479 B ist ein Verfahren und eine Struktur zur Herstellung einer Bremsscheibe aus einem Verbundwerkstoff mit hoher Wärmeableitung und geringem Gewicht bekannt, das im Wesentlichen darin besteht, dass zunächst mindestens ein Edelstahlblech einem Abschreckprozess unterzogen wird und nach der Bildung einer Ferritform auf Raumtemperatur abgekühlt wird und dann eine Aluminiumbremsscheibe und das Edelstahlblech auf eine Temperatur unterhalb der kritischen Temperatur der Aluminiumverflüssigung erhitzt werden, so dass ein Edelstahlblech gebildet wird. Dann wird der Verbindung ein Flussmittel hinzugefügt, um die Chromoxidschicht auf der Oberfläche des Edelstahlblechs und die Aluminiumoxidschicht auf der Oberfläche der Aluminiumscheibenbremse zu entfernen, wodurch auf natürliche Weise eine Metallverbindung zwischen dem Edelstahlblech und der Aluminiumscheibenbremse entsteht. Auf diese Weise wird eine zusammengesetzte Scheibenbremse aus Aluminium und rostfreiem Stahl hergestellt, um eine hohe Wärmeleitfähigkeit und leichte Scheibenbremsen zu erreichen, wobei die Kontaktfläche zwischen den beiden maximiert wird, um die Wärmeableitungsrate und Verschleißfestigkeit zu erhöhen.

Auch bekannt aus der TW M 548 226 U ist eine Bremsscheibenstruktur mit einer keramischen Oberfläche, die einen zentralen Scheibenkörper aus Eisenmetallmaterial und mindestens zwei äußere Scheibenkörper umfasst, die jeweils mit einer ersten Oberfläche und einer zweiten Oberfläche auf gegenüberliegenden Seiten des zentralen Scheibenkörpers durch ein metallurgisches Reaktionsverfahren verbunden sind. Der äußere Scheibenkörper besteht aus einem Leichtmetallmaterial, und auf der äußeren Oberfläche des äußeren Scheibenkörpers wird durch ein Mikrobogenoxidationsverfahren eine Keramikschicht gebildet.

Und auch ist aus der DE 20 2019 107 269 U1 eine Bremseinheit bekannt, aufweisend einen metallischen Grundkörper, der mindestens einen Bereich mit ausgebildeten Reibflächen und mindestens einen Bereich mit ausgebildeten Anlageflächen aufweist, wobei mindestens der Bereich der Reibflächen und der Bereich der Anlageflächen eine Al-basierte oder FeAlbasierte Verschleiß- und Korrosionsschutzschicht aufweist, die eine Schichtdicke von 0,4mm bis 0,6mm aufweist und mindestens als Diffusionsschicht im Material des metallischen Grundkörpers ausgebildet ist.

Nachteilig bei den bekannten Lösungen ist es, dass der Korrosions- und Verschleißschutz nur oberflächig im Bereich der Reibflächen auf den metallischen Grundkörper des Bremskörpers aufgebracht ist und unmittelbar nach den ersten Bremsvorgängen abgerieben wird, so dass die Reibfläche nach kurzer Zeit korrodiert und durch die korrosiven Prozesse unmittelbar den Grundwerkstoff beschädigen.

Gerade bei beispielsweise Elektrofahrzeugen oder Hybridfahrzeugen wird eine wesentliche geringere Anzahl von Bremsvorgängen realisiert, wodurch ein erhöhter Korrosionsansatz verursacht wird, der zu Fehlfunktionen führt. Diese Fehlfunktionen zeigen sich mit Geräuschproblemen und können im Extremfall zu einem Verlust der Bremsleistung führen. Zudem besteht ein weiterer Nachteil darin, dass durch die auftretende Korrosion im Bereich der Reibflächen ein höherer Verschleiß der Reibflächen zu verzeichnen ist.

Nachteilig sind auch die hohen Material- und Herstellungskosten von bekannten hartstoffbeschichteten Bremsscheiben mit Schichtsystemen auf der Basis von Carbiden wie zum Beispiel Wolframcarbid, Chromcarbid oder Borcarbid.

Nachteilig ist weiterhin, dass die durch Diffusionsprozesse erreichbaren Schichten eine unzureichende Schichtdicke aufweisen, um die im herkömmlichen Fertigungsprozess vorhandenen Toleranzen auszugleichen, ohne das ein erheblicher Teil der ohnehin geringen Schichtdicke wieder abgetragen werden muss, um die Fertigungstoleranzen von Offset, Reibbandstärke und Planlauf herzustellen.

Die Aufgabe der vorliegenden Erfindung besteht in der Angabe eines Verfahrens zur Herstellung von Bremskörpern sowie die Angabe von Bremskörpern, mit denen die vorgenannten Nachteile des Standes der Technik beseitigt werden.

Die Aufgabe wird durch die in den Patentansprüchen angegebene Erfindung gelöst. Vorteilhafte Ausgestaltungen der Erfindung sind Gegenstand der Unteransprüche, wobei die Erfindung auch Kombinationen der einzelnen abhängigen Patentansprüche im Sinne einer Und-Verknüpfung einschließt, solange sie sich nicht gegenseitig ausschließen.

Gelöst wird die Aufgabe durch ein Verfahren zur Herstellung eines Bremskörpers mit Verschleiß- und Korrosionsschutz, der mindestens einen metallischen Grundkörper mit mindestens einem Oberflächenbereich zum Ausbilden einer Reibfläche aufweist, bei dem mindestens eine Lage eines Perforationen aufweisenden Stahl-Halbzeugs mindestens auf dem als Reibfläche vorgesehen Oberflächenbereich angeordnet wird, und nachfolgend mittels eines Fügeverfahrens mindestens die perforierte Lage mit dem metallischen Grundkörper stoffschlüssig verbunden wird, nachfolgend eine Al-basierte Legierung mindestens auf der perforierten Lage und in den Öffnungen der Perforationen des Stahl-Halbzeugs angeordnet wird, und anschließend eine thermische Behandlung des Bremskörpers durchgeführt und eine Diffusionsstruktur mindestens aus der mindestens einen perforierten Lage des Stahl-Halbzeugs und der Al-basierten Legierung ausgebildet wird.

Vorteilhafterweise wird die ausgebildete Lage des Stahl-Halbzeugs im Wesentlichen vollständig auf der als Reibfläche vorgesehenen Oberfläche des metallischen Grundkörpers angeordnet.

Vorteilhaft ist auch, wenn mindestens eine Lage angeordnet wird, die eine gradierte Schichtdicke und/oder Materialzusammensetzung aufweist.

In einer vorteilhaften Ausgestaltung des Verfahrens werden zwei oder mehrere Lagen des Stahl-Halbzeugs angeordnet. Und auch vorteilhafterweise werden mehrere Lagen des Stahl-Halbzeugs angeordnet, die aus einem gleichen oder unterschiedlichem Material und/oder Schichtdicken hergestellt sind.

Weiterhin ist vorteilhaft, wenn die zwei oder mehreren Lagen in einem oder mehreren Verfahrensschritten mittels Fügeverfahren mit dem metallischen Grundkörper und/oder untereinander stoffschlüssig verbunden werden.

In einer vorteilhaften Ausgestaltung des Verfahrens wird mindestens eine aus zwei oder mehreren Segmenten bestehende Lage des Stahl-Halbzeugs angeordnet.

Auch ist vorteilhaft, wenn mindestens eine Lage des Stahl-Halbzeugs angeordnet wird, bei der der Volumenanteil der Öffnungen 40 Vol.-% bis 90 Vol.-% zum Volumenanteil der Lage aus Stahl beträgt.

Ebenfalls vorteilhafterweise wird mindestens eine Lage des Stahl-Halbzeugs angeordnet, bei dem die Öffnung der Perforationen kegelförmig ausgebildet sind.

Insbesondere vorteilhaft ist es, wenn die mindestens eine Lage des Stahl-Halbzeugs mittels Magnetimpulsschweißen, Lötschweißen, Walzplattieren, Ultraschallschweißen, Reibschweißen und/oder deren Modifikationen mit dem metallischen Grundkörper stoffschlüssig verbunden wird.

Auch vorteilhaft ist, wenn auf der perforierten Lage des Stahl-Halbzeugs eine Al-basierte Legierung mit Si, Ti, Cr, Mn, Ni, Ta, B, V, C, Nb, Zr, Y und/oder Mo angeordnet wird.

Weiterhin ist vorteilhaft, wenn eine Al-basierte Legierung mit einem Si-Anteil von 5 Ma.-% bis 20 Ma.-% angeordnet wird.

Und auch ist vorteilhaft, wenn die Al-basierte Legierung mittels Pulver oder Draht durch thermisches Spritzen und/oder als Lack, Schmelze oder Emulsion durch Tauchen, Rackeln oder Lackieren angeordnet wird.

In einer vorteilhaften Ausgestaltung des Verfahrens wird abschließend eine mechanische Bearbeitung der Oberfläche mindestens der Reibfläche des Bremskörpers realisiert.

Auch ist vorteilhaft, wenn die thermische Behandlung des Bremskörpers und/oder die mechanische Bearbeitung der Oberfläche der ausgebildeten Diffusionsstruktur unter Schutzgasatmosphäre durchgeführt wird.

Vorteilhaft ist das erfindungsgemäße Verfahren, wenn die thermische Behandlung des Bremskörpers bei einer Behandlungsdauer von 40 bis 300 Minuten und einer Temperatur von 400°C bis 1.226°C, besonders vorteilhaft bei einer Temperatur von 550°C bis 650°C durchgeführt wird.

Und auch vorteilhafterweise wird der metallische Grundkörper vor dem Anordnen der ersten Lage und/oder vor dem Anordnen der Al-basierten Legierung auf eine Temperatur von 250°C bis 650°C unter Schutzgasatmosphäre vorgewärmt wird.

Die erfindungsgemäße Aufgaben wird auch durch einen Bremskörper gelöst, der mindestens einen metallischen Grundkörper mit mindestens einer ausgebildeten Reibfläche aufweist, wobei mindestens die ausgebildete Reibfläche aus mindestens einer Lage eines Perforationen enthaltenden Stahl-Halbzeug gebildet ist, das stoffschlüssig mit dem Grundkörper verbunden ist und auf dem eine Al-basierte Legierung angeordnet ist, die die Öffnungen der Perforation des Stahl-Halbzeuges im Wesentlichen vollständig ausfüllt, wobei die Reibfläche eine Diffusionsstruktur ist, die aus der Al-basierten Legierung und dem Material des metallischen Halbzeugs und/oder des metallischen Grundkörpers durch thermische initiierte Diffusionsprozesse gebildet ist.

In einer vorteilhaften Ausgestaltung weist die ausgebildete Reibfläche eine Schichtdicke von 0,05mm bis 4,0 mm, besonders vorteilhaft 0,3mm bis 0,6mm auf.

Weiterhin vorteilhaft ist, wenn die Diffusionsstruktur bis in den metallischen Grundkörper ausgebildet ist.

Auch vorteilhafterweise enthält die Diffusionsstruktur im Wesentlichen Eisen-, Nickel und/oder Titanaluminide.

In einer vorteilhaften Ausgestaltung des Bremskörpers weist mindestens die Reibfläche Verschleißerkennungsmerkmale auf, wobei besonders vorteilhaft die Verschleißerkennungsmerkmale durch kegelförmig ausgebildete Öffnungen oder durch Farbeinlagerungen in oder zwischen mindestens einer Lage des Stahl-Halbzeugs realisiert sind.

Mit der vorliegenden Erfindung ist es erstmals gelungen, ein Verfahren bereitzustellen, mit dem Bremskörper mit verbesserten Verschleiß- und Korrosionsschutzeigenschaften herstellbar sind, deren Reibfläche eine große Schichtdicke aufweist und die zeit- und kostengünstig herstellbar sind.

Im Rahmen der Erfindung soll unter einem Bremskörper ein Bauteil in Form einer Bremsscheibe oder Bremstrommel verstanden werden, das aus einem metallischen Grundkörper besteht und unterschiedliche funktionalisierte Bereiche wie diametral angeordnete Reibflächen, eine Anlagefläche zum Befestigen des Bremskörpers an einer Achse oder Welle oder auch durch Stege ausgebildete Belüftungskanäle aufweist.

Unter einem metallischen Grundkörper soll im Rahmen der Erfindung die ausgebildete Bremsscheibe oder Bremstrommel mit den funktionalisierten Bereichen verstanden werden, die aus Stahl, Grauguss und/oder Aluminium hergestellt ist.

Unter Reibflächen soll im Rahmen der Erfindung eine ein- oder zweiseitig ausgebildete scheibenartige Schicht und Fläche verstanden werden, über die im Zusammenwirken mit passend ausgebildeten Bremsbelägen die Bremswirkung erreicht wird.

Mit der vorliegenden Erfindung ist es erstmals gelungen, Bremskörper in Form einer Bremsscheibe oder Bremstrommel mit verbesserten Korrosions- und Verschleißschutzeigenschaften bereitzustellen. Ein Bremskörper ist ein metallischer Grundkörper, der mindestens einen Oberflächenbereich zum Ausbilden einer Reibfläche aufweist. Auf diesen Oberflächenbereich wird mindestens eine Lage eines Stahl-Halbzeugs angeordnet, wobei die Lage Perforationen aufweist. Die Reibfläche wird dadurch ausgebildet, in dem die mindestens eine Lage des Stahlhalbzeugs in einem ersten Verfahrensschritt durch ein Fügeverfahren stoffschlüssig mit dem metallischen Grundkörper verbunden wird. Die verbesserten Verschleiß- und Korrosionsschutzeigenschaften werden mindestens im Bereich der Reibflächen des Bremskörpers erreicht, wobei auch die Bereiche der Anlagefläche und/oder der Belüftungskanäle den erfindungsgemäßen Verschleiß- und Korrosionsschutz aufweisen können.

Erfindungswesentlich ist, dass die mindestens eine Lage des Stahl-Halbzeugs mit dem metallischen Grundkörper durch ein Fügeverfahren stoffschlüssig verbunden wird. Das stoffschlüssige Fügen mindestens einer Lage des Stahl-Halbzeug hat den Vorteil, dass ein gleichmäßiger stofflicher Verbund von Stahl-Halbzeug und metallischem Grundkörper realisiert wird, wodurch eine sichere Verbindung der Reibfläche mit dem metallischen Grundkörper erreicht wird. Zudem werden verbesserte Wärmeleiteigenschaften zwischen metallischem Grundkörper und Reibfläche erreicht, was zu einer längeren Standzeit des Bremskörpers bei verbessertem Verschleiß- und Korrosionsschutz führt.

Das bereits vorgefertigte Stahl-Halbzeug weist erfindungsgemäß Perforationen in Form von durchgehenden Öffnungen auf.

Im Rahmen der Erfindung soll unter Perforation eine geometrisch sich wiederholende Folge von subtraktiven Freiformen im Material des Stahl-Halbzeugs verstanden werden, deren Anzahl und Position variabel eingestellt sein kann und regelmäßig oder auch unregelmäßig im Material des Stahl-Halbzeugs angeordnet sind.

So ist beispielsweise vorstellbar, dass in einem äußeren Umfangsbereich einer Lage eine größere Anzahl von Öffnungen vorhanden ist, während beispielsweise in einem innerem Umfangsbereich der Lage eine geringere Anzahl von Öffnungen angeordnet ist. Vorstellbar ist auch, dass die Größe der Öffnungen innerhalb einer Lage unterschiedlich eingestellt ist. Über die Anzahl, Größe, Form und Verteilung der Perforationen lassen sich die thermischen und tribologischen Eigenschaften der Reibfläche individuell einstellen und auf das vorgesehene Einsatzgebiet konkret abstimmen.

Die eine oder mehreren Lagen des Stahl-Halbzeugs werden erfindungsgemäß nachfolgend mit dem metallischen Grundkörper durch ein Fügeverfahren stoffschlüssig verbunden. Besonders kostengünstige und schnelle Fügeverfahren sind vorteilhafterweise das Magnetimpulsschweißen, Lötschweißen, Walzplattieren und/oder Reibschweißen und deren spezialisierte Modifikationen.

Nach der stoffschlüssigen Verbindung der mindestens einen und Perforationen aufweisenden Lage des Stahl-Halbzeugs mit dem metallischen Grundkörper wird in einem nächsten Verfahrensschritt eine Schicht einer Al-basierten Legierung auf der perforierten Lage des Stahl-Halbzeugs angeordnet. Dabei wird die Oberfläche der perorierten Lage des Stahl-Halbzeuges und die Öffnungen der Perforationen mit der Al-basierten Legierung im Wesentlichen vollständig ausgefüllt. Insofern liegt vor der nachfolgenden thermischen Behandlung des Bremskörpers mindestens eine Lage eines Stahl-Halbzeugs vor, auf deren freien Oberfläche und in deren Öffnungen eine Al-basierten Legierung angeordnet ist, die die Öffnungen der Perforationen bis zum metallischen Grundkörper im Wesentlichen vollständig verschließt.

Durch eine anschließende thermische Behandlung werden der Stahl des Halbzeuges und die Al-basierte Legierung in den Öffnungen der Perforationen ganz oder teilweise in intermetallische Verbindungen zu einer Diffusionsstruktur umgewandelt und dadurch die vorgesehene Reibfläche ausgebildet.

Für einen besonders guten Verschleiß- und Korrosionsschutz, auch bereits während des Herstellungsprozesses des Bremskörpers, hat sich herausgestellt, dass es vorteilhaft ist, wenn auf der perforierten Lage des Stahl-Halbzeugs eine Al-basierte Legierung mit zusätzlichen Legierungsbestandteilen Si, Ti, Cr, Mn, Ni, Ta, B, V, C, Nb, Zr, Y und/oder Mo angeordnet wird. Es konnte überraschend festgestellt werden, dass durch den Anteil an Si, Ti, Cr, Mn, Ni, Ta, B, V, C, Nb, Zr, Y und/oder Mo als Legierungsbestandteil während der thermischen Behandlung Zonen intermetallischer Phasen in der Diffusionsstruktur ausgeschieden werden, die im Zusammenwirken mit dem Aluminium zu einer besonders homogenen und harten Reibfläche führen. Auch wurde herausgefunden, dass mit einem zusätzlichen Anteil an Si, Ti, Cr, Mn, Ni, Ta, B, V, C, Nb, Zr, Y und/oder Mo an der Al-basierten Legierung besonders vorteilhaft Sauerstoff gebunden wird und damit Oxidationsprozesse mit dem Material des metallischen Grundkörpers durch Bildung von Eisenoxiden und Aluminiumoxiden vermindert werden. Die verminderte Oxidbildung ermöglicht ein ungestörtes und schnelles Wachstum von Eisenaluminiden im Material des Grundkörpers, der ausgebildeten Lage des Stahl-Halbzeugs sowie im Bereich der mit der Al-Legierung ausgefüllten Öffnungen der Perforationen.

Nach dem Anordnen der Al-basierten Legierung wird eine thermische Behandlung des Bremskörpers durchgeführt, wodurch Diffusionsprozesse ausgelöst und eine Diffusionsstruktur erzeugt wird.

Unter einer Diffusionsstruktur soll im Rahmen der Erfindung mindestens die hergestellte Reibfläche des Bremskörpers verstanden werden, die aus der mindestens einen Lage des Stahl-Halbzeugs und der Al-basierten Legierung durch Diffusionsprozesse zwischen den beiden Diffusionspartnern erzeugt ist. Im Ergebnis der thermisch initiierten Diffusionsprozesse werden mindestens im unmittelbaren Randbereich des Stahl-Halbzeuges im Bereich der mit der Al-basierten Legierung beschichteten Oberfläche und der gefüllten Öffnungen der Perforationen, aber auch im Grenzbereich zum metallischen Grundkörper, Eisenaluminde gebildet.

Mit dem Eindiffundieren der Al-basierten Legierung in das Material des Stahl-Halbzeugs und in das Material des metallischen Grundkörpers ergibt sich überraschenderweise eine wesentlich verbesserte Oberflächenhärte der Reibfläche von 350 HV [0,3] bis 850 HV [0,3]. Der technische Vorteil der festgestellten Härte der Diffusionsschicht besteht darin, dass ein reduzierter Abrieb der Reibfläche erreicht wird, was sich positiv auf die Standzeit des Bremskörpers auswirkt und zudem die Feinstaubemission signifikant reduziert.

Zur Bereitstellung einer größeren wirksamen Reibfläche ist es von Vorteil, wenn die ausgebildete Lage des Stahl-Halbzeugs im Wesentlichen vollständig auf der als Reibfläche vorgesehenen Oberfläche des metallischen Grundkörpers angeordnet wird. Insbesondere für größere und schwerere Fahrzeuge mit erhöhter benötigter Bremskraft kann dies erforderlich sein, während für Fahrzeuge mit geringeren Bremsanforderungen, z.B. aufgrund der Rekuperation bei Elektrofahrzeugen, eine nur teilweise Anordnung einer Lage des Stahl-Halbzeugs auf der als Reibfläche vorgesehene Oberfläche des metallischen Grundkörpers realisiert sein kann.

Vorstellbar ist auch, dass vorteilhafterweise zwei oder mehrere Lagen des Stahl-Halbzeugs angeordnet werden, die in der Summe die Schichtdicke der Reibfläche des Bremskörpers bilden. Hierbei können Lagen mit gleichem oder unterschiedlichem Werkstoff, unterschiedlicher Schichtdicke innerhalb einer Lage oder auch mit unterschiedlichen Schichtdicken der Lagen untereinander angeordnet werden und in einem oder mehreren Verfahrensschritten mittels Fügeverfahren mit dem metallischen Grundkörper stoffschlüssig verbunden werden.

Zur Vereinfachung des Fügeverfahrens zum stoffschlüssigen Verbinden der Lage des Stahl-Halbzeugs mit dem metallischen Grundkörper ist es von Vorteil, wenn mindestens eine Lage des Stahl-Halbzeugs durch einzelne Segmente gebildet wird. Durch die Anordnung von einzelnen Segmenten wird es beispielsweise möglich, Oberflächenstrukturen in der Reibfläche durch beispielsweise eine Beabstandung der Segmente mit Spaltbildung zueinander zu erzeugen, in die die Al-basierte Legierung eingetragen werden kann. Derartige Oberflächenstrukturen können beispielsweise spaltartig ausgebildete und bis zum metallischen Grundkörper reichende Vertiefungen sein, die zu einem verbesserten Wärme- und Abriebaustrag aus der Reibfläche führen und so die Leistung des Bremskörpers verbessern.

Ein weiterer Vorteil der Anordnung von Segmenten einer Lage des Stahl-Halbzeuges besteht darin, dass das stoffschlüssige Fügeverfahren zeit- und kostengünstiger ausgestaltet werden kann, da ein höher Energieeintrag je Fläche ermöglicht wird, was zu einem schnelleren stofflichen Verbinden der Segmente mit dem metallischen Grundkörper führt. Zudem lassen sich in einfacher Weise Oberflächenstrukturen erzeugen, die beispielsweise für das thermische Verhalten und den Abtransport von Feinstaub vorteilhaft sind.

Zum einfachen Bereitstellen optimaler Diffusionsbedingungen für die Ausbildung der gewünschten Diffusionsstruktur der Reibfläche ist es von Vorteil, wenn bei einer perforierten Lage des Stahl-Halbzeugs der Volumenanteil der Öffnungen 40 Vol.-% bis 90 Vol.-% des Materials der Lage beträgt. Über den Volumenanteil der Öffnungen lässt sich so in einfacher Weise das Verhältnis von Stahl und Al-basierter Legierung einstellen und auf die Diffusionsprozesse zwischen den Diffusionspartner einwirken. Ein größerer Volumenanteil von Öffnungen führt zu einem höheren Anteil der Al-basierten Legierung im Material des Stahl-Halbzeuges, während ein geringerer Volumenanteil von Öffnungen zu einem höheren Anteil des Stahls innerhalb der Lage führt.

In einer vorteilhaften Ausgestaltung der erfindungsgemäßen Bremskörper kann vorgesehen sein, dass mindestens eine Lage des Stahl-Halbzeugs angeordnet wird, bei der die Öffnung der Perforationen kegelförmig ausgebildet sind. Kegelförmig ausgebildete Öffnung der Perforation können als Verschleißerkennungsmerkmale dienen. So ist bekannt, dass bei der Beanspruchung einer Reibfläche sehr hohe Temperaturen entstehen, die zu farblichen Änderungen in der Diffusionsstruktur führen. Derartige farbliche Veränderungen sind insbesondere im Stahl des Halbzeugs zu erwarten, sodass mit der zunehmenden Veränderung der Farbe der Diffusionsstruktur der Verschleißzustand und die mögliche verbleibende Standzeit der Reibfläche und des Bremskörpers entnommen werden kann.

Zur Anordnung der Al-basierten Legierung auf der perforierten Lage des Stahl-Halbzeugs hat sich als vorteilhaft erwiesen, wenn die Al-basierte Legierung mittels Pulver oder Draht durch thermisches Spritzen und/oder als Lack, Schmelze oder Emulsion durch Tauchen, Rackeln oder Lackieren angeordnet wird. Die genannten Beschichtungsverfahren ermöglichen insbesondere, dass die als Pulver, Lack, Draht, Schmelze oder Emulsion vorliegende Al-basierte Legierung insbesondere auch in die Öffnungen der Perforationen der Lage des Stahlhalbzeugs vordringen kann, sodass die Lage und die Öffnungen vollständig mit der Al-basierten Legierung beschichtet bzw. gefüllt sind. Dies ist vor allem für die nachfolgende Ausbildung einer möglichst großen und homogenen Diffusionsstruktur der Reibfläche von Bedeutung.

Es konnte herausgefunden werden, dass mit einer Al-basierten Legierung im Zusammenwirken mit dem Stahl des perforierten Halbzeugs ein besonders vorteilhafter Verschleiß- und Korrosionsschutz erreicht wird, wenn die thermische Behandlung bei einer Temperatur von 400°C bis 1.220°C, bevorzugt bei 550°C bis 650°, und einer Behandlungsdauer von 40 bis 300 Minuten erfolgt.

Der vorteilhafte Temperaturbereich von 550°C bis 650°C führt dazu, dass die Diffusionsgeschwindigkeit bei der Erzeugung der Diffusionsstruktur gesteigert wird und gleichzeitig das aufgetragene Material unterhalb des Schmelzpunktes gehalten wird. Ein Wegfliesen der aufgetragenen Al-basierten Legierung von der Oberfläche des Stahl-Halbzeugs wird vermieden.

Von besonderem Vorteil ist, wenn der Bremskörper vor dem Anordnen mindestens einer Lage des Stahl-Halbzeuges und/oder vor dem Anordnen der Al-basierten Legierung auf eine Temperatur von 250°C bis 650°C unter Schutzgasatmosphäre vorgewärmt wird. Es wurde festgestellt, dass bei einer Temperatur über 200°C beim Vorwärmen normalerweise unerwünschte Oxidationsprodukte entstehen, die jedoch durch den Einsatz einer Schutzgasatmosphäre und/oder auch beim Einsatz der vorgeschlagenen zusätzlichen Legierungselemente wesentlich vermindert wird.

Bei einer Vorwärmtemperatur von über 500°C konnte festgestellt werden, dass die Anordnung und Verarbeitung der Al-basierten Legierung vereinfacht und zeitsparend erfolgen kann, wodurch der Aufwand zur mechanischen Nachbearbeitung zur Beseitigung der überschüssigen Oberflächenschicht vermindert wird. Diese Vorteile werden insbesondere beim Rakeln der Al-basierten Legierung auf die Perforationen aufweisenden Lage des Stahl-Halbzeugs erzielt.

Ein Verzicht auf den Einsatz von Schutzgas beim Vorwärmen des Bremskörpers ist überraschenderweise dann möglich, wenn die Vorwärmtemperatur lediglich bei 150°C bis 200°C eingestellt wird.

Aufgrund der im Stahl-Halbzeug vorgesehenen durchgehenden Öffnungen der Perforationen ist es möglich, dass die Diffusionsstruktur bis in den metallischen Grundkörper ausgebildet ist.

Es konnte herausgefunden werden, dass eine besonders verschleißfeste und korrosionsbeständige Reibfläche des Bremskörpers dann vorliegt, wenn die Diffusionsstruktur aus im Wesentlichen Eisen-, Nickel und/oder Titanaluminiden gebildet ist. Eisen-, Nickel und/oder Titanaluminide führen insbesondere dazu, dass eine besonders homogene und eine hohe Härte aufweisende Reibfläche bereitgestellt wird, wodurch die Feinstaubbelastung und der Verschleiß signifikant reduziert wird.

Auch wurde überraschend festgestellt, dass durch den Einsatz einer Al-basierten Legierung mit einem Anteil an Silizium von 5 Ma.-% bis 20 Ma.-% während der thermischen Behandlung besonders homogene Silizium-Anteile in der Diffusionsstruktur vorliegen, die im Zusammenwirken mit dem Aluminiden zu einer besonders homogenen und harten Reibfläche führen. Der Anteil an Silizium mit einem Anteil von 5 Ma.-% bis 20 Ma.-% hat den weiteren Vorteil, dass in besonders vorteilhafter Weise Sauerstoff gebunden wird und damit Oxidationsprozesse mit dem Material des metallischen Grundkörpers durch Bildung von Eisenoxiden verhindert werden. Die verhinderte Eisenoxidbildung ermöglicht ein ungestörtes und schnelles Wachstum von Eisenaluminiden im Material des Stahl-Halbzeugs.

Die vorteilhafte Schichtdicke der hergestellten Reibfläche beträgt 0,05mm bis 4,0mm. Im Interesse einer kostengünstigen Herstellung sowie zum Erreichen optimaler Wärmeleiteigenschaften sind Schichtdicken der Reibflächen von 0,3mm bis 0,6mm besonders vorteilhaft.

Mit einer möglichen abschließenden mechanischen Bearbeitung der Oberfläche, mindestens der Reibflächen nach der thermischen Behandlung wird der technische Effekt erreicht, dass die überschüssige Al-basierte Oberflächenschicht beseitigt wird, sodass im Gegensatz zu bekannten gasnitrierten Bremskörpers der erfindungsgemäße Bremskörper sowohl mit NAO Bremsbelägen (Non Asbestos Organic) als auch mit Low Met Bremsbelägen (Low Metallic) eingesetzt werden kann.

Die abschließende mechanische Bearbeitung ermöglicht zudem einen thermisch bedingten Verzug der Reibfläche und des Bremskörpers in einfacher Weise zu korrigieren, ohne dass dabei die verbesserten Verschleiß- und Korrosionseigenschaften entfernt und die erforderliche Schichtdicke der Reibfläche signifikant vermindert werden. Durch die abschließende mechanische Bearbeitung wird zudem erreicht, dass ein zusätzlicher Arbeitsgang zur Beseitigung von Unwuchten entfallen kann und durch die einstellbare Oberflächengüte ein angepasster Traganteil des Belages erzielt wird.

Durch den erfindungsgemäßen Bremskörper, der mindestens im Bereich der Reibflächen mindestens eine Lage eines Stahl-Halbzeugs aufweist, wird dieser Nachteil beseitigt, da durch die besondere Härte von 350 HV [0,3] bis 850HV [0,3] ein Einlaufen der Bremsbeläge in die Reibflächen vermieden wird.

In einer vorteilhaften Ausgestaltung der Erfindung können neben den Reibflächen auch der Bereich der Anlagefläche und/oder die Belüftungskanäle mit der erfindungsgemäßen Al-basierten Legierung versehen und der erfindungsgemäße Verschleiß- und Korrosionsschutz in Form einer Diffusionsschicht ausgebildet sein.

So ist es möglich, dass nicht nur die Reibflächen nach der Anordnung mindestens einer perforierten Lage des Stahl-Halbzeuges mit einer Al-basierten Legierung beschichtet werden. Auch die Beschichtung der Anlagefläche und/oder der Belüftungskanäle kann in einem Verfahrensschritt mit der Al-basierten Legierung erfolgen. Mit dem nachfolgenden Schritt der thermischen Behandlung des Bremskörpers wird im Zusammenwirken mit dem metallischen Grundkörper eine Diffusionsschicht realisiert, sodass auch die Anlagefläche und/oder die Belüftungskanäle einen verbesserten Verschleiß- und Korrosionsschutz aufweisen.

Die Herstellung des Verschleiß- und Korrosionsschutzes im Bereich der Anlagefläche bietet den technischen Vorteil, dass beispielsweise bei einer Bremsscheibe das Setzungsverhalten bei der kraftstoffschlüssigen Verbindung mit der Achse eines Fahrzeuges deutlich reduziert wird.

Die Bereitstellung eines verbesserten Verschleiß- und Korrosionsschutzes im Bereich der Belüftungskanäle führt dazu, dass die rauhe Oberfläche der Belüftungskanäle aufgrund der geringen Korrosionsneigung, insbesondere auch beim Einwirken von winterlichen Salzlösungen oder auch aggressiven Felgenreinigern, erhalten bleibt und ein dauerhaftes - Durchströmen der Belüftungskanäle und damit eine verbesserte Wärmeabführung bei Bremsvorgängen ermöglicht wird.

Das thermisch initiierte Eindiffundieren der Al-basierten Legierung in den Werkstoff des metallischen Grundkörpers im Bereich der Belüftungskanäle ermöglicht, die Verbindungsstege der Belüftungskanäle mit geringerer Wandstärke zu dimensionieren. Es ist bekannt, dass die bisher aus dem Stand der Technik bekannten Verbindungsstege unter Berücksichtigung des fehlenden Korrosionsschutzes und des damit erhöhten Verschleißes eine Mindestwandstärke von 5mm aufweisen müssen.

Durch den zusätzlichen Verschleiß- und Korrosionsschutz im Bereich der Belüftungskanäle wird eine signifikante Reduzierung der Mindestgeometrie um ca. 40% bis 50% möglich, wodurch erstmalig eine gewichtsoptimierte und kostengünstigere Bremsscheibe bereitgestellt wird.

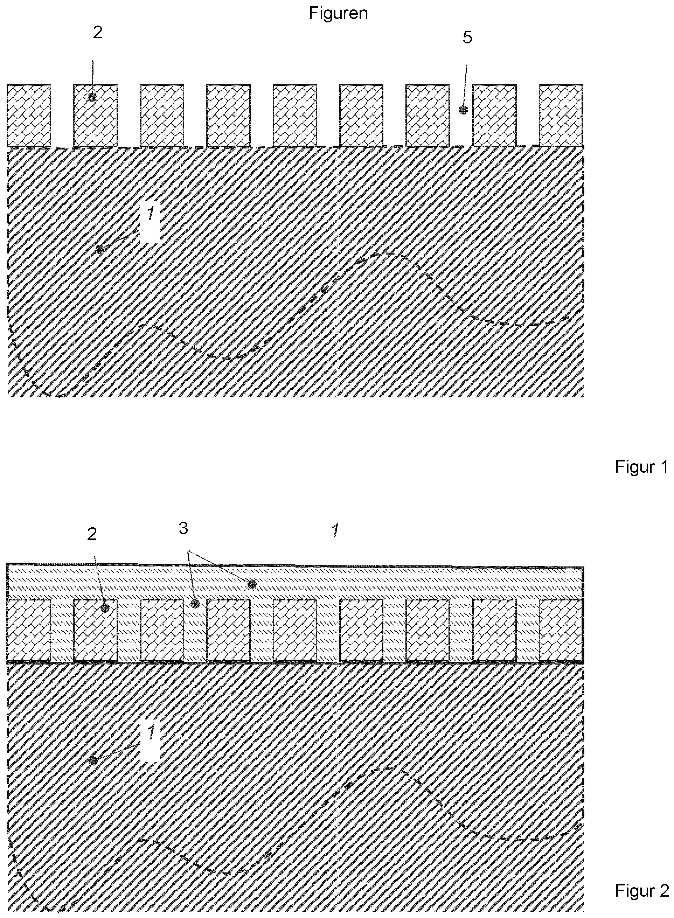

Nachfolgend wird die Erfindung anhand eines Ausführungsbeispiels näher erläutert. Die dazugehörigen Zeichnungen zeigen
Fig. 1 - Reibfläche einer Scheibenbremse mit einer perforierten Lage eines Edelstahls
Fig. 2 - Reibfläche einer Scheibenbremse mit einer perforierten Lage eines Edelstahls mit aufgetragener Al-basierter Legierung

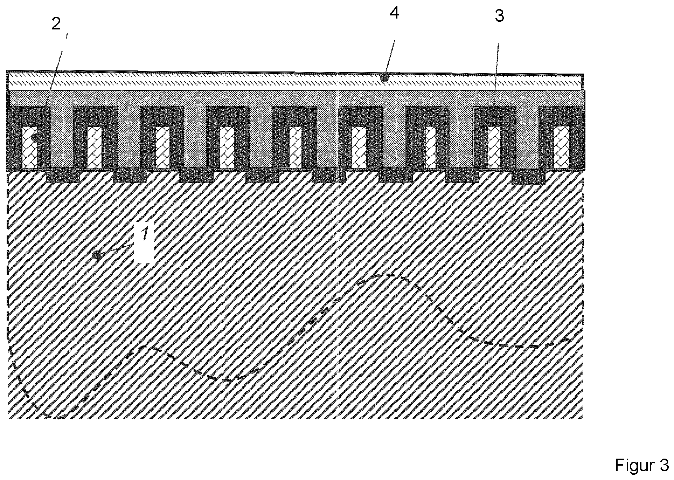

Fig. 3 - Reibfläche einer Scheibenbremse nach der thermischen Behandlung

### Ausführungsbeispiel 1

Eine innenbelüftete Bremsscheibe eines Fahrzeuges aus Grauguss wird bereitgestellt, die eine Härte von 200 HV [0,3] bis 250 HV [0,3], im Mittel 211 HV [0,3], aufweist. Die Bremsscheibe weist zwei voneinander diametral gegenüberliegend angeordnete Reibflächen sowie eine Anlagefläche für die Befestigung der Bremsscheibe an einer Achse auf. Die beiden Reibflächen sind durch stegartig ausgebildete Belüftungskanäle verbunden. Mittels Korund (99,81% Al₂O₃, 0,1% Na₂O,0,04% TiO_{2,} 0,02% SiO_{2,} 0,03% Fe₂O₃) und unter Anwendung einer Stickstoff-Schutzgasatmosphäre wird die Oberfläche der beiden Reibflächen zweimalig in und entgegen der Drehrichtung der Bremsscheibe bei einem Winkel von 45° mechanisch bearbeitet und dadurch Verschmutzungen sowie Eisenoxide entfernt, um verbesserte Bedingungen für die nachfolgende stoffschlüssige Verbindung mit dem metallischen Grundkörper 1 mit einer Lage eines Stahl-Halbzeugs bereitzustellen. Zudem wird die lamellare Struktur des Graugusses im oberflächennahen Bereich verändert und beseitigt.

Anschließend wird im Bereich der vorgesehenen Reibflächen auf dem metallischen Grundkörper 1 eine kreisrunde und perforierte Lage 2 eines Edelstahl-Bandmaterials angeordnet und mittels Magnetimpulsschweißen stoffschlüssig mit dem metallischen Grundkörper 1 verbunden. Die perforierte Lage 2 des Edelstahl-Bandmaterials hat eine Höhe von 0,45mm und weist in regelmäßigen Abständen durchgehende Öffnungen mit einem Durchmesser von 1,5mm auf. Der Volumenanteil der Öffnungen beträgt 60% zum Volumenanteil des Edelstahl-Bandmaterials. Im Anschluss wird die Bremsscheibe einer Beschichtungsanlage zugeführt und unter Stickstoff-Schutzgasatmosphäre mittels Tauchvorgang eine AlSi₁₂-Legierung auf der Oberfläche der Lage 2 aus Edelstahl und in die Öffnungen der Perforation 5 der Lage angeordnet. Nach der Beschichtung wird in einem Ofen eine thermische Behandlung unter Argon-Schutzgasatmosphäre der gesamten Bremsscheibe vorgenommen. Die thermische Behandlung wird bei 580°C für 240 Minuten durchgeführt und anschließend die Bremsscheibe abgekühlt. Durch die thermische Behandlung hat sich eine Diffusionsstruktur 3 von Eisenaluminiden mit einer Schichtdicke 0,5mm sowie eine Al-basierte Oberflächenschicht 4 mit einer Schichtdicke von ca. 50µm ausgebildet.

Die überschüssige Al-basierte Oberflächenschicht 4 wird im Bereich der Reibflächen anschließend mittels Schleifen mechanisch bearbeitet und bis zur Diffusionsstruktur 3 abgetragen, sodass im Bereich der Reibflächen ausschließlich die Diffusionsstruktur 3 aus gewachsenen Eisenaluminiden verbleibt. Silizium liegt in der Diffusionsschicht homogen verteilt vor. Im Bereich der Belüftungskanäle erfolgt keine mechanische Bearbeitung der Oberflächen. Die Reibflächen, Anlagefläche sowie die Belüftungskanäle haben eine Härte von mind. 350 HV [0,3] und weisen einen Langzeit-Verschleiß- und Korrosionsschutz auf.

### Bezugszeichenliste

1 - metallischer Grundkörper
2 - Lage eines Stahl-Halbzeuges
3 - Diffusionsstruktur
4 - Al-basierte Oberflächenschicht
5 - Perforationen

## Patentansprüche

1. Verfahren zur Herstellung eines Bremskörpers, der mindestens einen metallischen Grundkörper (1) mit mindestens einem Oberflächenbereich zum Ausbilden einer Reibfläche aufweist, bei dem mindestens eine Lage eines Perforationen (5) aufweisenden Stahl-Halbzeugs (2) mindestens auf dem als Reibfläche vorgesehen Oberflächenbereich angeordnet wird, und nachfolgend mittels eines Fügeverfahrens mindestens die perforierte Lage mit dem metallischen Grundkörper (1) stoffschlüssig verbunden wird,
**dadurch gekennzeichnet, dass**
nachfolgend eine Al-basierte Legierung (4) mindestens auf der perforierten Lage und in den Öffnungen der Perforationen (5) des Stahl-Halbzeugs (2) angeordnet wird, und anschließend eine thermische Behandlung des Bremskörpers durchgeführt und eine Diffusionsstruktur (3) mindestens aus der mindestens einen perforierten Lage des Stahl-Halbzeugs (2) und der Al-basierten Legierung (4) ausgebildet wird.

2. Verfahren nach Anspruch 1, bei dem die ausgebildete Lage des Stahl-Halbzeugs (2) im Wesentlichen vollständig auf der als Reibfläche vorgesehenen Oberfläche des metallischen Grundkörpers (1) angeordnet wird.

3. Verfahren nach Anspruch mindestens einem der vorhergehenden Ansprüche, bei dem mindestens eine Lage angeordnet wird, die eine gradierte Schichtdicke und/oder Materialzusammensetzung aufweist.

4. Verfahren nach mindestens einem der vorherigen Ansprüche, bei dem zwei oder mehrere Lagen des Stahl-Halbzeugs (2) angeordnet werden.

5. Verfahren nach mindestens einem der vorhergehenden Ansprüche, bei dem mehrere Lagen des Stahl-Halbzeugs (2) angeordnet werden, die aus einem gleichen oder unterschiedlichem Material und/oder Schichtdicken hergestellt sind.

6. Verfahren nach Anspruch 4, bei dem die zwei oder mehreren Lagen in einem oder mehreren Verfahrensschritten mittels Fügeverfahren mit dem metallischen Grundkörper (1) und/oder untereinander stoffschlüssig verbunden werden.

7. Verfahren nach mindestens einem der vorhergehenden Ansprüche, bei dem mindestens eine aus zwei oder mehreren Segmenten bestehende Lage des Stahl-Halbzeugs (2) angeordnet wird.

8. Verfahren nach mindestes einem der vorhergehenden Ansprüche, bei dem mindestens eine Lage des Stahl-Halbzeugs (2) angeordnet wird, bei der der Volumenanteil der Öffnungen 40 Vol.-% bis 90 Vol.-% zum Volumenanteil der Lage aus Stahl beträgt.

9. Verfahren nach mindestens einem der vorhergehenden Ansprüche, bei dem mindestens eine Lage des Stahl-Halbzeugs (2) angeordnet wird, bei dem die Öffnung der Perforationen (5) kegelförmig ausgebildet sind.

10. Verfahren nach mindestens einem der vorhergehenden Ansprüche, bei dem die mindestens eine Lage des Stahl-Halbzeugs (2) mittels Magnetimpulsschweißen, Lötschweißen, Walzplattieren, Ultraschallschweißen, Reibschweißen und/oder deren Modifikationen mit dem metallischen Grundkörper (1) stoffschlüssig verbunden wird.

11. Verfahren nach mindestens einem der vorhergehenden Ansprüche, bei dem auf der perforierten Lage des Stahl-Halbzeugs (2) eine Al-basierte Legierung (4) mit Si, Ti, Cr, Mn, Ni, Ta, B, V, C, Nb, Zr, Y und/oder Mo angeordnet wird.

12. Verfahren nach mindestens einem der vorhergehenden Ansprüche, bei dem eine Al-basierte Legierung (4) mit einem Si-Anteil von 5 Ma.-% bis 20 Ma.-% angeordnet wird.

13. Verfahren nach mindestens einem der vorhergehenden Ansprüche, bei der die Al-basierte Legierung (4) mittels Pulver oder Draht durch thermisches Spritzen und/oder als Lack, Schmelze oder Emulsion durch Tauchen, Rackeln oder Lackieren angeordnet wird.

14. Verfahren nach mindestens einem der vorhergehenden Ansprüche, bei dem abschließend eine mechanische Bearbeitung der Oberfläche mindestens der Reibfläche des Bremskörpers realisiert wird.

15. Verfahren nach mindestens einem der vorhergehenden Ansprüche, bei dem die thermische Behandlung des Bremskörpers und/oder die mechanische Bearbeitung der Oberfläche der ausgebildeten Diffusionsstruktur (3) unter Schutzgasatmosphäre durchgeführt wird.

16. Verfahren nach mindestens einem der vorhergehenden Ansprüche, bei dem die thermische Behandlung des Bremskörpers bei einer Behandlungsdauer von 40 bis 300 Minuten und einer Temperatur von 400°C bis 1.226°C, besonders vorteilhaft bei einer Temperatur von 550°C bis 650°C durchgeführt wird.

17. Verfahren nach mindestens einem der vorhergehenden Ansprüche, bei dem der metallische Grundkörper (1) vor dem Anordnen der ersten Lage und/oder vor dem Anordnen der Al-basierten Legierung (4) auf eine Temperatur von 250°C bis 650°C unter Schutzgasatmosphäre vorgewärmt wird.

18. Bremskörper, der mindestens einen metallischen Grundkörper (1) mit mindestens einer ausgebildeten Reibfläche aufweist, wobei mindestens die ausgebildete Reibfläche aus mindestens einer Lage eines Perforationen (5) enthaltenden Stahl-Halbzeug (2) gebildet ist, das stoffschlüssig mit dem Grundkörper (1) verbunden ist, **dadurch gekennzeichnet, dass** auf dem eine Al-basierte Legierung (4) angeordnet ist, die die Öffnungen der Perforation (5) des Stahl-Halbzeuges (2) im Wesentlichen vollständig ausfüllt, wobei die Reibfläche eine Diffusionsstruktur (3) ist, die aus der Al-basierten Legierung (4) und dem Material des metallischen Halbzeugs (2) und/oder des metallischen Grundkörpers (1) durch thermische initiierte Diffusionsprozesse gebildet ist.

19. Bremskörper nach Anspruch 18, bei dem die ausgebildete Reibfläche eine Schichtdicke von 0,05mm bis 4,0 mm, besonders vorteilhaft 0,3mm bis 0,6mm aufweist.

20. Bremskörper nach mindestens einem der vorhergehenden Ansprüche, bei dem die Diffusionsstruktur (3) bis in den metallischen Grundkörper (1) ausgebildet ist, wobei besonders vorteilhaft die Diffusionsstruktur (3) im Wesentlichen Eisen-, Nickel und/oder Titanaluminide enthält.

21. Bremskörper nach mindestens einem der vorhergehenden Ansprüche, bei dem mindestens die Reibfläche Verschleißerkennungsmerkmale aufweist, wobei besonders vorteilhaft die Verschleißerkennungsmerkmale durch kegelförmig ausgebildete Öffnungen oder durch Farbeinlagerungen in oder zwischen mindestens einer Lage des Stahl-Halbzeugs (2) realisiert sind.

## Claims

1. Method for producing a brake body, comprising at least one metal main body (1) with at least one surface region for forming a friction surface, wherein at least one layer of a steel semi-finished product (2) having perforations (5) is arranged at least on the surface region provided as a friction surface, and subsequently at least the perforated layer is integrally bonded to the metal main body (1) by means of a joining process,
**characterized in that**
subsequently an Al-based alloy (4) is arranged at least on the perforated layer and in the openings of the perforations (5) of the steel semi-finished product (2), and subsequently a thermal treatment of the brake body is carried out and a diffusion structure (3) is formed at least from the at least one perforated layer of the steel semi-finished product (2) and the Al-based alloy (4).

2. Method according to claim 1, wherein the formed layer of the steel semi-finished product (2) is arranged substantially completely on the surface of the metal main body (1) provided as a friction surface.

3. Method according to claim at least one of the preceding claims, wherein at least one layer is arranged which has a graded layer thickness and/or material composition.

4. Method according to at least one of the preceding claims, wherein two or more layers of the steel semi-finished product (2) are arranged.

5. Method according to at least one of the preceding claims, wherein a plurality of layers of the steel semi-finished product (2) are arranged, which are made of the same or different material and/or layer thicknesses.

6. Method according to claim 4, wherein the two or more layers are integrally bonded to the metal main body (1) and/or to one another in one or more method steps by means of joining processes.

7. Method according to at least one of the preceding claims, wherein at least one layer, consisting of two or more segments, of the steel semi-finished product (2) is arranged.

8. Method according to at least one of the preceding claims, wherein at least one layer of the steel semi-finished product (2) is arranged in which the volume fraction of the openings is 40 vol.% to 90 vol.% of the volume fraction of the layer of steel.

9. Method according to at least one of the preceding claims, wherein at least one layer of the steel semi-finished product (2) is arranged in which the opening of the perforations (5) is conical.

10. Method according to at least one of the preceding claims, wherein the at least one layer of the steel semi-finished product (2) is integrally bonded to the metal main body (1) by means of magnetic pulse welding, brazing, roll cladding, ultrasonic welding, friction welding and/or modifications thereof.

11. Method according to at least one of the preceding claims, wherein an Al-based alloy (4) with Si, Ti, Cr, Mn, Ni, Ta, B, V, C, Nb, Zr, Y and/or Mo is arranged on the perforated layer of the steel semi-finished product (2).

12. Method according to at least one of the preceding claims, wherein an Al-based alloy (4) with a Si content of 5 wt.% to 20 wt.% is arranged.

13. Method according to at least one of the preceding claims, wherein the Al-based alloy (4) is arranged by means of powder or wire by thermal spraying and/or as a lacquer, melt or emulsion by dipping, scraping or coating.

14. Method according to at least one of the preceding claims, wherein finally mechanical processing of the surface of at least the friction surface of the brake body is carried out.

15. Method according to at least one of the preceding claims, wherein the thermal treatment of the brake body and/or the mechanical processing of the surface of the formed diffusion structure (3) is carried out under a protective gas atmosphere.

16. Method according to at least one of the preceding claims, wherein the thermal treatment of the brake body is carried out for a treatment duration of 40 to 300 minutes and at a temperature of 400°C to 1,226°C, particularly advantageously at a temperature of 550°C to 650°C.

17. Method according to at least one of the preceding claims, wherein the metal main body (1) is preheated to a temperature of 250°C to 650°C under a protective gas atmosphere before the first layer is arranged and/or before the Al-based alloy (4) is arranged.

18. Brake body comprising at least one metal main body (1) with at least one formed friction surface, at least the formed friction surface being formed from at least one layer of a steel semi-finished product (2) containing perforations (5) which is integrally bonded to the main body (1), **characterized in that** an Al-based alloy (4) is arranged on the, which substantially completely fills the openings of the perforation (5) of the steel semi-finished product (2), the friction surface being a diffusion structure (3) formed from the Al-based alloy (4) and the material of the metal semi-finished product (2) and/or of the metal main body (1) by thermally initiated diffusion processes.

19. Brake body according to claim 18, wherein the formed friction surface has a layer thickness of 0.05 mm to 4.0 mm, particularly advantageously 0.3 mm to 0.6 mm.

20. Brake body according to at least one of the preceding claims, wherein the diffusion structure (3) extends into the metal main body (1), the diffusion structure (3) particularly advantageously containing substantially iron, nickel and/or titanium aluminides.

21. Brake body according to at least one of the preceding claims, wherein at least the friction surface has wear detection features, the wear detection features being particularly advantageously realized by conical openings or by color deposits in or between at least one layer of the steel semi-finished product (2).

## Revendications

1. Procédé de fabrication d'un corps de frein qui présente au moins un corps de base métallique (1) comportant au moins une zone de surface pour la formation d'une surface de friction, dans lequel au moins une couche d'un produit semi-fini en acier (2) présentant des perforations (5) est disposée au moins sur la zone de surface prévue comme surface de friction, et ensuite, au moyen d'un procédé d'assemblage, au moins la couche perforée est reliée par liaison de matière au corps de base métallique (1),
**caractérisé en ce que**
un alliage à base d'aluminium (4) est ensuite disposé au moins sur la couche perforée et dans les ouvertures des perforations (5) du produit semi-fini en acier (2), et un traitement thermique du corps de frein est ensuite effectué et une structure de diffusion (3) est formée au moins à partir de l'au moins une couche du produit semi-fini en acier (2) perforée et de l'alliage à base d'aluminium (4).

2. Procédé selon la revendication 1, dans lequel la couche formée du produit semi-fini en acier (2) est disposée sensiblement entièrement sur la surface du corps de base métallique (1) prévue comme surface de friction.

3. Procédé selon la revendication d'au moins l'une des revendications précédentes, dans lequel au moins une couche est disposée, laquelle présente une épaisseur de couche et/ou une composition de matériau graduées.

4. Procédé selon au moins l'une des revendications précédentes, dans lequel deux couches du produit semi-fini en acier (2) ou plus sont disposées.

5. Procédé selon au moins l'une des revendications précédentes, dans lequel plusieurs couches du produit semi-fini en acier (2) sont disposées, lesquelles sont fabriquées dans un matériau et/ou des épaisseurs de couche identiques ou différents.

6. Procédé selon la revendication 4, dans lequel les deux couches ou plus sont reliées par liaison de matière en une ou plusieurs étapes de procédé au moyen d'un procédé d'assemblage avec le corps de base métallique (1) et/ou entre elles.

7. Procédé selon au moins l'une des revendications précédentes, dans lequel au moins une couche du produit semi-fini en acier (2) constituée de deux segments ou plus est disposée.

8. Procédé selon au moins l'une des revendications précédentes, dans lequel au moins une couche du produit semi-fini en acier (2) est disposée, dans lequel la fraction volumique des ouvertures est comprise entre 40 % en volume et 90 % en volume par rapport à la fraction volumique de la couche en acier.

9. Procédé selon au moins l'une des revendications précédentes, dans lequel au moins une couche du produit semi-fini en acier (2) est disposée, dans lequel les ouvertures des perforations (5) sont de forme conique.

10. Procédé selon au moins l'une des revendications précédentes, dans lequel l'au moins une couche du produit semi-fini en acier (2) est reliée par liaison de matière au corps de base métallique (1) au moyen d'un soudage par impulsions magnétiques, soudage par brasage, placage par laminage, soudage par ultrasons, soudage par friction et/ou leurs modifications.

11. Procédé selon au moins l'une des revendications précédentes, dans lequel sur la couche du produit semi-fini en acier (2) perforée est disposé un alliage à base d'aluminium (4) comportant Si, Ti, Cr, Mn, Ni, Ta, B, V, C, Nb, Zr, Y et/ou Mo.

12. Procédé selon au moins l'une des revendications précédentes, dans lequel un alliage à base d'aluminium (4) comportant une teneur en Si allant de 5 % en masse à 20 % en masse est disposé.

13. Procédé selon au moins l'une des revendications précédentes, dans lequel l'alliage à base d'aluminium (4) est disposé au moyen d'une poudre ou d'un fil par pulvérisation thermique et/ou sous forme de laque, masse fondue ou émulsion par immersion, raclage ou laquage.

14. Procédé selon au moins l'une des revendications précédentes, dans lequel un usinage mécanique de la surface d'au moins la surface de friction du corps de frein est finalement réalisée.

15. Procédé selon au moins l'une des revendications précédentes, dans lequel le traitement thermique du corps de frein et/ou l'usinage mécanique de la surface de la structure de diffusion (3) formée sont effectués sous atmosphère de gaz protecteur.

16. Procédé selon au moins l'une des revendications précédentes, dans lequel le traitement thermique du corps de frein est effectué pendant une durée de traitement allant de 40 à 300 minutes et à une température allant de 400 °C à 1 226 °C et, de manière particulièrement avantageuse, à une température allant de 550 °C à 650 °C.

17. Procédé selon au moins l'une des revendications précédentes, dans lequel le corps de base métallique (1) est préchauffé à une température allant de 250 °C à 650 °C sous atmosphère de gaz protecteur avant la disposition de la première couche et/ou avant la disposition de l'alliage à base d'aluminium (4).

18. Corps de frein, lequel présente au moins un corps de base métallique (1) comportant au moins une surface de friction formée, dans lequel au moins la surface de friction formée est composée d'au moins une couche d'un produit semi-fini en acier (2) contenant des perforations (5) et reliée par liaison de matière au corps de base (1), **caractérisé en ce qu'**un alliage à base d'aluminium (4) est disposé sur, lequel alliage à base d'aluminium remplit sensiblement entièrement les ouvertures des perforations (5) du produit semi-fini en acier (2), dans lequel la surface de friction est une structure de diffusion (3) qui est composée à partir de l'alliage à base d'aluminium (4) et du matériau du produit semi-fini (2) métallique et/ou du corps de base métallique (1) par des processus de diffusion initiés thermiquement.

19. Corps de frein selon la revendication 18, dans lequel la surface de friction formée présente une épaisseur de couche allant de 0,05 mm à 4,0 mm et, de manière particulièrement avantageuse, de 0,3 mm à 0,6 mm.

20. Corps de frein selon au moins l'une des revendications précédentes, dans lequel la structure de diffusion (3) est formée jusque dans le corps de base métallique (1), dans lequel, de manière particulièrement avantageuse, la structure de diffusion (3) contient sensiblement des aluminures de fer, de nickel et/ou de titane.

21. Corps de frein selon au moins l'une des revendications précédentes, dans lequel au moins la surface de friction présente des caractéristiques de reconnaissance d'usure, dans lequel les caractéristiques de reconnaissance d'usure sont réalisées de manière particulièrement avantageuse par des ouvertures de forme conique ou par des dépôts de peinture dans au moins une couche du produit semi-fini en acier (2) ou entre plusieurs d'entre elles.
